# EUROPEAN PATENT APPLICATION

(11) **EP 4 306 332 A1**
(43) Date of publication of application: **17.01.2024**
(21) Application number: 22184115.8
(22) Date of filing: 11.07.2022
(51) Int. Cl.: B60B 3/14, B60B 27/06, B60B 35/02

(54) **WHEEL MOUNTING ASSEMBLY AND TRAVELLING DEVICE**

(71) Applicant: Nilfisk A/S, 2100 Copenhagen Ø (DK)
(72) Inventor: Worm, Erik Kristensen, 9240 Nibe (DK)
(74) Representative: Plougmann Vingtoft a/s

(57) **Abstract**

The invention relates to a wheel mounting assembly (M) comprising at least one axle (1) and an adapter (2), the axle (1) configured to support a wheel assembly (W), the adapter (2) configured to be fixed on a frame (F), the axle (1) having a first match part (11) at an axle mounting end (E21), the adapter (2) having a second match part (21) at an adapter mounting end (E21), the first match part (11) and the second match part (21) configured to be able to connect with each other in a manner of not relatively rotate with each other in a circumferential direction (C), the axle (1) having at least one axle hole (H1), the adapter (2) having at least one adapter hole (H2), the axle hole (H1) and the adapter hole (H2) configured to be passed through by a fastener.

## Description

### FIELD OF THE INVENTION

The present invention relates to the field of mechanical connecting. Especially, the invention relates to a wheel mounting assembly and travelling device.

### BACKGROUND OF THE INVENTION

Taking a travelling device for example, especially one that is adapted to different workloads with different wheels, or one that shares a modular frame with other travelling devices having wheels of different dimensions.

For such kind of travelling devices, there is a need to assemble wheels of different dimensions to a common frame. Since wheels of different dimensions usually require axles of different dimensions, and normally a travelling device has a welded on or one-piece axle, this makes it difficult or expensive to change to a different type of wheels.

### SUMMARY OF THE INVENTION

Hence, an improved apparatus would be advantageous, and in particular a more simple and easily operated wheel mounting apparatus would be advantageous.

In particular, it may be seen as an object of the present invention to provide a wheel mounting assembly that solves the above-mentioned problems of the prior art with multi parts and complex structure which will leads to difficulty in changing different wheels to a frame.

In a first aspect, the invention provides a wheel mounting assembly comprising at least one axle and an adapter, the axle configured to support a wheel assembly, the adapter configured to be fixed on a frame, the axle having a first match part at an axle mounting end, the adapter having a second match part at an adapter mounting end, the first match part and the second match part configured to be able to connect with each other in a manner of not relatively rotate with each other in a circumferential direction, the axle having at least one axle hole, the adapter having at least one adapter hole, the axle hole and the adapter hole configured to be passed through by a fastener.

The invention is particularly, but not exclusively, advantageous for obtaining a simple structure for installing wheels of different dimensions and/or for easily installing or taking off wheels on a travelling device, as well as obtaining a low cost and high efficiency.

In some embodiments, the wheel mounting assembly comprising a plurality of axles and an adapter, at least two of the axles being of different dimensions. In particular, at least two of the axles have different lengths and/or different diameters.

In some embodiments, the first match part and the second match part configured to be able to connect with each other in a form-locked manner.

In some embodiments, the first match part is a convex part configured to face the second match part, and the second match part is a concave part configured to face the first match part, or the first match part is a concave part configured to face the second match part, and the second match part is a convex part configured to face the first match part.

Specially, in the axial direction, the end face of the first match part is not in touch with the end face of the second match part. Thereby it is obtained that the first match part and the second match part could transmit torque from each other to the maximum.

Specially, in the axial direction, the height of the convex part is shorter than the depth of the concave part.

In some embodiments, in a situation that the first match part being a convex part, the axle hole going through the first match par, and in a situation that the second match part being a convex part, the adapter hole going through the second match part.

Specially, the adapter hole is a screw hole. Thereby just to use a bolt, one can install the wheel mounting assembly.

In some embodiments, the axle hole comprising a first hole part and a second hole part connecting to each other, the first hole part being configured to face the adapter and the second hole part being configured to face away from the adapter, inner diameter of the second hole part is larger than inner diameter of the first hole part, the fastener being a bolt, the second hole part configured to accommodate a bolt head of the bolt.

In some embodiments, the axle comprises a flange at an end opposite of the first match part, the flange being configured to be in contact with the wheel assembly. Thereby, the wheel assembly could be positioned at one axial end by the flange.

Specially, the axle comprises a main part and a washer part which being configured to be able to be detachable, the first match part being on the main part, the flange being part of the washer part.

It is particularly good for an axle with a first matching part of big diameter, which is bigger than the diameter of the main body where to install the wheel assembly. In this situation, the wheel assembly could be added to the axle from the flange end.

Specially, in situation that the main part and the washer part being attached, the washer part being not able to rotate relative to the main part.

In some embodiments, the adapter comprising a first part and a second part connecting to each other, outer diameter of the first part is larger than outer diameter of the second part, in axial direction, the first part configured to face away from the axle and the second part configured to face the axle.

In a second aspect, the invention provides a travelling device comprising:
- a frame;
- at least one wheel assembly; and
- at least one wheel mounting assembly according to the first aspect of the invention,
wherein the wheel assembly being assembled on the axle of the wheel mounting assembly, the adapter of the wheel mounting assembly being fixed on the frame. The wheel assembly of the travelling device could be taken off easily, and/or when there is a need to change wheel assemblies of different dimensions, it is easy to do that.

In some embodiments, the adapter being welded on the frame.

In some embodiments, the frame comprising a mounting hole, the adapter being positioned partly in the mounting hole.

In some embodiments, the frame comprises a mounting hole, the adapter being positioned partly in the mounting hole, the adapter comprising a first part and a second part connecting to each other, outer diameter of the first part is larger than outer diameter of the second part, in axial direction, the first part configured to face away from the axle and the second part configured to face the axle, between the first part and the second part forming a shoulder, the shoulder being in contact with the frame.

In some embodiments, the travelling device is a pressure washer.

It is appreciated that the same advantages and embodiments described for the first aspect apply as well for the second and third aspects. Further, it is appreciated that the described embodiments can be intermixed in any way between all the mentioned aspects.

### BRIEF DESCRIPTION OF THE FIGURES

The apparatus according to the invention will now be described in more detail with regard to the accompanying figures. The figures show one way of implementing the present invention and is not to be construed as being limiting to other possible embodiments falling within the scope of the attached claim set.
FIG. 1 is a cut section side view of part of an embodiment of a travelling device according to the invention,
FIGs. 2-3 are schematic drawings illustrating an embodiment of an adapter according to the invention,
FIG. 4 is a cut section side view of part of an embodiment of an adapter installing on a frame according to the invention,
FIGs. 5-6 are schematic drawings illustrating an embodiment of an axle according to the invention,
FIG. 7 is a schematic drawing illustrating a second embodiment of an axle according to the invention,
FIG. 8 is a schematic drawing illustrating a third embodiment of part of a wheel mounting assembly according to the invention,

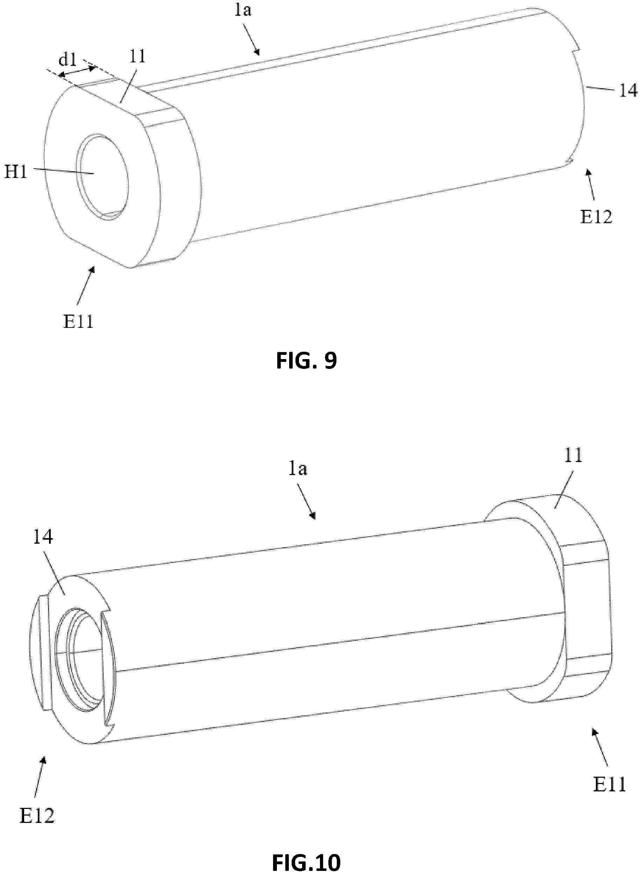

FIGs. 9-10 are schematic drawings illustrating the third embodiment of an axle according to the invention,

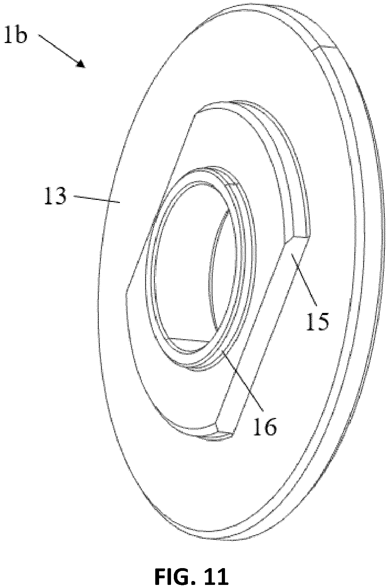

FIG. 11 is a schematic drawing illustrating the third embodiment of an washer according to the invention.

### DESCRIPTION OF REFERENCE SIGNS

D: travelling device
M: wheel mounting assembly
W: wheel assembly
F: frame
F1: mounting hole
G: gap
1: axle
11: first match part
11e: end face of the first match part 11
12: outer rim of axle
13: flange
14: first positioning part
15: second positioning part
16: rim
H1: axle hole
H11: first hole part
H12: second hole part
E11: axle mounting end
E12: flange end
2: adapter
2a: first part
2b: second part
2c: shoulder
21: second match part
21e: end face of the second match part 21
22: outer rim
H2: adapter hole
E21: adapter mounting end

### DETAILED DESCRIPTION OF AN EMBODIMENT

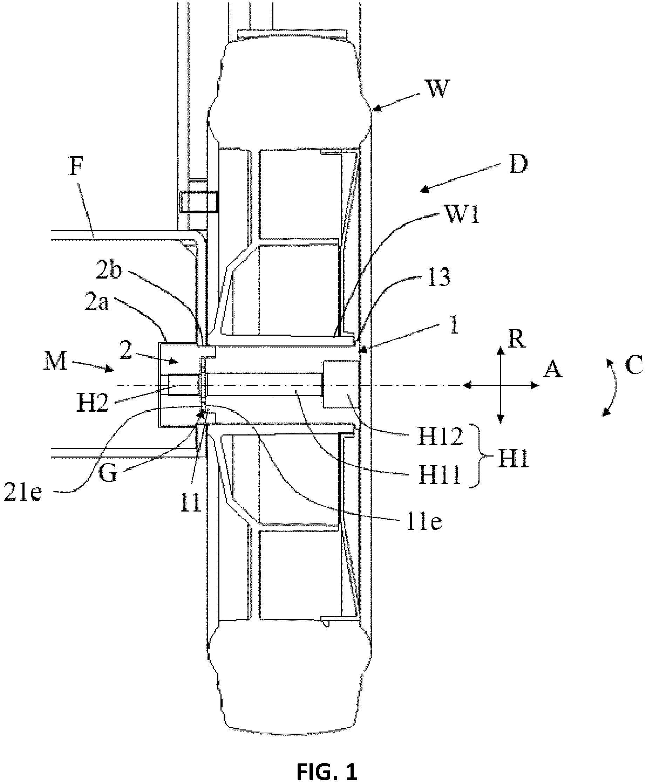

FIG. 1 shows part of an exemplary embodiment of a travelling device D according to the invention, which for example could be a heavy-load vehicle or a movable pressure washer, especially a professional high-pressure washer.

The travelling device comprises a frame F, at least one wheel mounting assembly M and at least one wheel assembly W. The wheel assembly W is particularly used as an idle wheel.

The wheel mounting assembly M comprises an axle 1 and an adapter 2.

The adapter 2 is fixed on the frame F. The axle 1 is installed on the adapter 2 in a manner of not relatively rotate with each other in the circumferential direction C. The wheel assembly W is installed on the axle 1, and the wheel can rotate relatively to the axle 1.

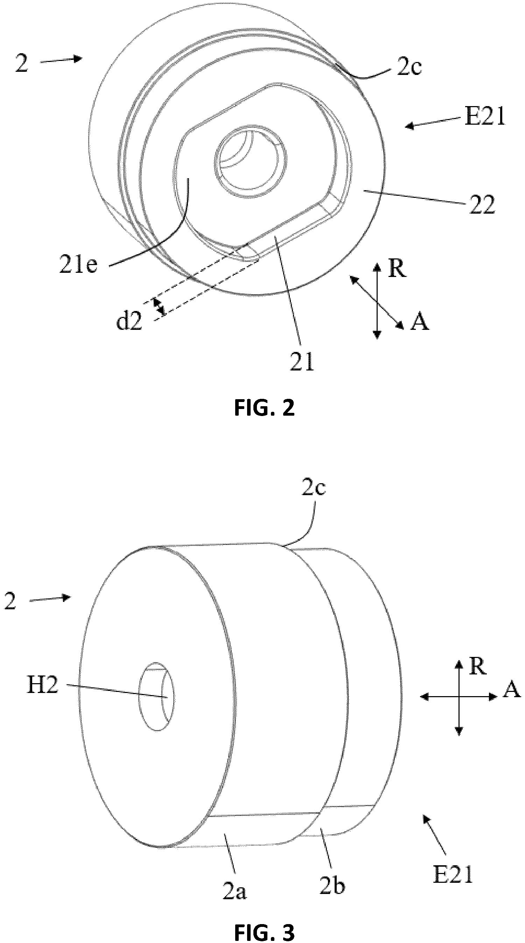

Refer to FIGs. 2-4, the adapter 2 has a cylinder shape. In the axial direction A, define one end of the adapter 2 that facing the axle 1 as the adapter mounting end E21.

At the adapter mounting end E21, the central part of the adapter 2 is concave to form a second match part 21. The outer part of the second match part 21 forms an outer rim 22.

In this embodiment, the second match part 21 is a blind hole with a slotted shape, which could match with a first match part 11 of the axle 1 to be introduced in the following description.

The inner part of the adapter 2 forms an adapter hole H2. In this embodiment, the adapter hole H2 is a screw hole, and it goes through the solid part of the adapter 2.

To observe the adapter 2 from its peripheral surface, the adapter 2 comprises a first part 2a and a second part 2b connecting with each other. The outer diameter of the first part 2a is larger than the outer diameter of the second part 2b. The surface between the first part 2a and the second part 2b forms a shoulder 2c.

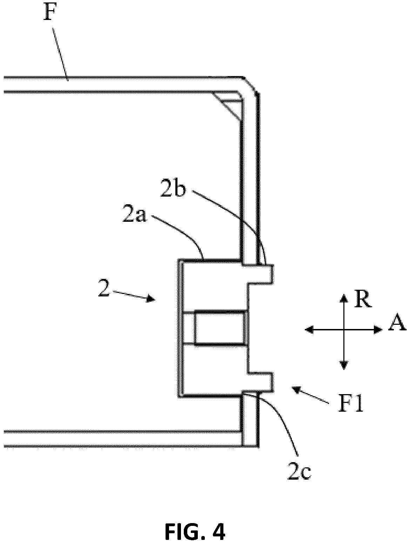

Refer to FIG. 4, the shoulder 2c attributes to position the adapter 2 on the frame F. The frame F comprises a mounting hole F1. The inner diameter of the mounting hole F1 is approximately the same with the outer diameter of the second part 2b of the adapter 2, and the inner diameter of the mounting hole F1 is smaller than the outer diameter of the first part 2a of the adapter 2. So, the adapter 2 could be inserted in the mounting hole F1 with the second part 2b touching the inner surface of the mounting hole F1 and the shoulder 2c in contacting with the side wall of the frame F.

Based on such positioning method, the adapter 2 could further be welded on the frame. It should be noted that, in other embodiments, the adapter 2 could also be fixed on the frame F in other ways, for example by using some other fasteners.

It should be noted that, in other embodiments, the adapter hole H2 could be a blind hole with an opening end facing the axle 1.

Refer to FIGs. 1, 5 and 6 to introduce the axle 1. The axle 1 has a cylinder shape. In the axial direction A, define one end of the axle 1 that facing the adapter 2 as the axle mounting end E11.

At the axle mounting end E11, the central part of the axle 1 is convex to form a first match part 11. At the axle mounting end E11, the outer part of the first match part 11 forms an outer rim of axle 12.

The first match part 11 has the same shape with the second match part 21, or in more precise words, when using a flat surface perpendicular to the axial direction to cut the first match part 11 and the second match part 21, the outline of the first match part 11 is approximately the same as the second match part 21. So, the first match part 11 and the second match part 21 can connect with each other in a form-locked manner to transmit torque.

In the axial direction, height d1 of the first match part 11 is shorter than the depth d2 (refer to FIG. 2 as well) of the second match part 21. So, in an assembled situation, there will be a gap G between the top of the first match part 11 and the bottom of the second match part 21. This ensures that when the axle 1 is assembled with the adapter 2, the outer rim 22 will be in contact with the outer rim of axle 12, to transfer a maximum torque between the axle 1 and the adapter 2.

The inner part of the axle 1 forms an axle hole H1. In this embodiment, the axle hole H1 is an unthreaded hole, and it goes through the axle 1.

The axle hole H1 comprises a first hole part H11 and a second hole part H12 connecting with each other in the axial direction A. The inner diameter of the second hole part H12 is larger than the inner diameter of the first hole part H11. The inner diameter of the first hole part H11 is a little bit larger than the inner diameter of the adapter hole H2. When using a bolt (not shown in the figures) to fasten the axle 1 and the adapter 2, the screw of the bolt will be engaged with thread on the adapter hole H2, and the screw head could be accommodated in the second hole part H12.

It should be understood that, in other embodiments, the axle hole H1 could be of the same diameter in different axial position, which means the second hole part H12 is not necessary. And in situation without a second hole part H12, the screw head could be set out of the axle hole H1.

The connecting structure of the first match part 11 and the second match part 21. could avoid the bolt from getting unscrewed. Even during the rotating movement of the wheel assembly W, the wheel hub W1 will transmit torque to the axle 1, the axle 1 will not rotate relative to the adapter 2, so the bolt is hardly rotating relative to the axle 1 or the adapter 2.

The other end of the axle 1 facing away from the adapter 2 forms a flange 13. When the axle 1, the adapter 2 and the wheel assembly W are assembled, the flange 13 is in contact with the wheel hub W1 of the wheel assembly W.

When in situation that the wheel assembly W is needed to be replaced, for example a wheel assembly W of small size will be replaced with one with bigger size, and the original axle 1 should also be replaced, the operator just need to unfasten the bolt, and take down the original axle 1. Then another axle with a different length and/or a different diameter but a first match part of the same size as that of the original axle 1 is replaced to fit the new wheel assembly W.

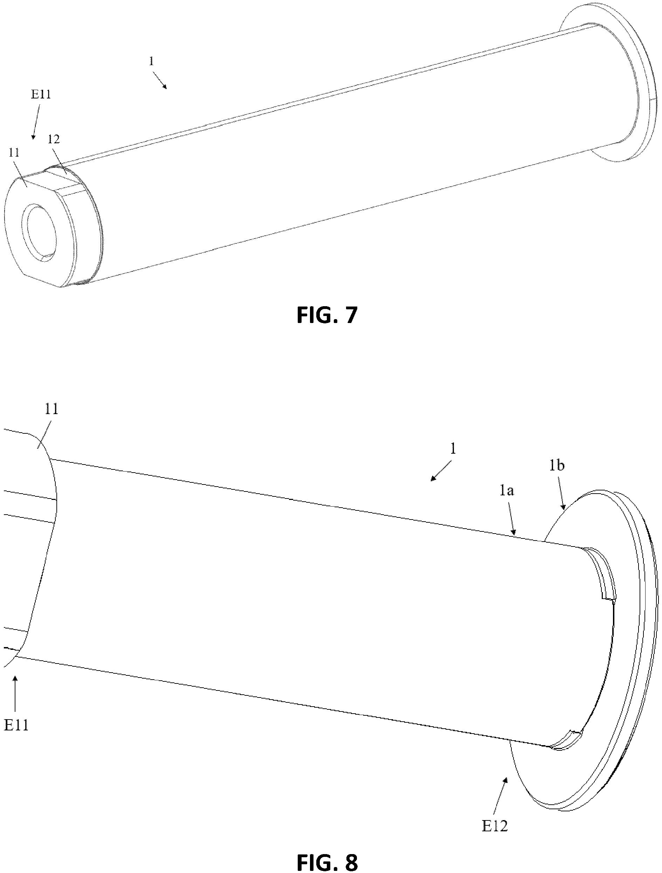

Fig. 7 shows a second embodiment of the axle 1 according to this invention.

In the following description of the second embodiment of the axle 1, only the differences to the first embodiment are explained in more detail. The explanations with respect to the first embodiment are also valid in the same way or in analogously the same way for the second embodiment. Same reference numerals designate the same features that have been explained with reference to the first embodiment or functionally equivalent features.

Compared to the first embodiment, that the diameter of the main body (where the wheel assembly is installed) of axle 1 is smaller, this makes the first match part 11 having almost the same diameter as the main body, and the outer rim of axle 12 could comprise two separate areas (not a circular area). In this situation, the area of outer rim of axle 12 would be pretty small, so it is preferably that the end face 11e of the first match part 11 being in touch with the end face 21e of the second match part 21, or in other words, there will be no gap G (refer to Fig. 1) in this situation.

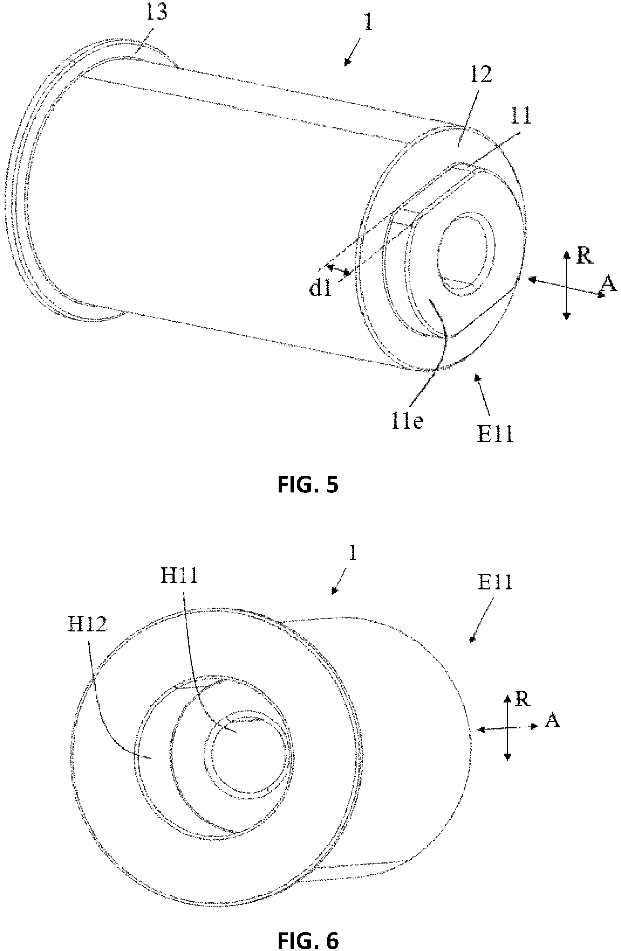

Figs. 6-8 shows a third embodiment of the axle 1 according to this invention.

In the following description of the third embodiment of the axle 1, only the differences to the first embodiment are explained in more detail. The explanations with respect to the first embodiment are also valid in the same way or in analogously the same way for the second embodiment. Same reference numerals designate the same features that have been explained with reference to the first embodiment or functionally equivalent features.

Compared to the first embodiment and the second embodiment, it is the main difference, that the diameter of the main body of the axle 1 is smaller than the diameter of the first match part 11, and the axle 1 comprises a main part 1a and a washer part 1b. In this situation, the wheel assembly W will be installed on the axle 1 from the flange end E12.

In this situation, the outer rim of axle 12 as showed in the first embodiment no longer exists. So, the height d1 of the first match part 11 could be shorter than, or equals to, or even longer than or the depth d2 of the second match part 12 (refer to FIG. 2), while it is preferable that the two parts are approximately at the same length. In any of the options that the height d1 and the depth d2 be chosen, the end face 11e of the first match part 11 would be in touch with the end face 21e of the second match part 21, or in other words, there would be no gap G (refer to Fig. 1) in this situation.

The washer part 1b could be fixed on the main part 1a by the above-mentioned fastener, so that after installation, the wheel assembly could be positioned in the axial direction A.

To better fix the washer part 1b in the circumferential direction C, at the flange end E12, the main part 1a forms a first positioning part 14, while the washer part 1b forms a second positioning part 15. The first positioning part 14 matches with the second positioning part 15, so that the washer part 1b could not rotate relatively to the main part 1a.

In this embodiment, the first positioning part 14 is a slot, and the second positioning part 15 is a protrusion that could be inserted into the slot.

To enhance concentricity of the main part 1a and the washer part 1b after assembling, the washer part 1b further comprises a rim 16. The rim 16 will be inserted in the axle hole H1, and the outer surface of the rim 16 touches the surface of the axle hole H1.

Although the present invention has been described in connection with the specified embodiments, it should not be construed as being in any way limited to the presented examples. For example:
(i) The first match part could be a concave part while the second match part could be a convex part.
(ii) The cross section of the first match and the second match part could have different shapes, for example of the shape of triangle or square, as long as they can transmit torque from each other.
(iii) The first match part could have several scattered parts, for example a plurality of convex parts, or a plurality of concave parts or even a combination of one or more convex parts and one or more concave parts; so could the second match part.
(iv) The axis of the axle hole H1 could be offset with the centre of the first match part, and the axis of the adapter hole H2 could be offset with the centre of the second match part.
(v) The travelling device D of the present invention do not to be movable all the time, for example it could be a stationary machine when the wheel assembly W and the axle 1 being taken off.
(vi) The adapter 2 could also be part of the frame F, and the description like "the adapter 2 being configured to be fixed on the frame F" also comprises the situation above.
(vii) The adapter hole H2 could also be an unthreaded hole, in this situation, a nut could be used to match with the bolt as a fastener.

The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A wheel mounting assembly (M) comprising at least one axle (1) and an adapter (2), the axle (1) configured to support a wheel assembly (W), the adapter (2) configured to be fixed on a frame (F),
the axle (1) having a first match part (11) at an axle mounting end (E11), the adapter (2) having a second match part (21) at an adapter mounting end (E21), the first match part (11) and the second match part (21) configured to be able to connect with each other in a manner of not relatively rotate with each other in a circumferential direction (C),
the axle (1) having at least one axle hole (H1), the adapter (2) having at least one adapter hole (H2), the axle hole (H1) and the adapter hole (H2) configured to be passed through by a fastener.

2. A wheel mounting assembly (M) according to claim 1, comprising a plurality of axles (1) and an adapter (2), at least two of the axles (1) being of different dimensions.

3. A wheel mounting assembly (M) according to claim 1 or 2, wherein the first match part (11) and the second match part (21) configured to be able to connect with each other in a form-locked manner.

4. A wheel mounting assembly (M) according to any of the claims 1 to 3, wherein the first match part (11) is a convex part configured to face the second match part (21), and the second match part (21) is a concave part configured to face the first match part (11), or
the first match part (11) is a concave part configured to face the second match part (21), and the second match part (21) is a convex part configured to face the first match part (11).

5. A wheel mounting assembly (M) according to claim 4, in axial direction (A), end face (11e) of the first match part (11) is not in touch with end face (21e) of the second match part (21).

6. A wheel mounting assembly (M) according to claim 5, in the axial direction (A), height of the convex part is shorter than depth of the concave part.

7. A wheel mounting assembly (M) according to any of the claims 4 to 6, in situation that the first match part (11) being a convex part, the axle hole (H1) going through the first match part (11), and
in the situation that the second match part (21) being a convex part, the adapter hole (H2) going through the second match part (21).

8. A wheel mounting assembly (M) according to any of the claims 1 to 7, wherein the adapter hole (H2) is a screw hole.

9. A wheel mounting assembly (M) according to any of the claims 1 to 8, wherein
the axle hole (H1) comprising a first hole part (H11) and a second hole part (H12) connecting to each other, the first hole part (H11) being configured to face the adapter (2) and the second hole part (H12) being configured to face away from the adapter (2),
inner diameter of the second hole part (H12) is larger than inner diameter of the first hole part (H11),
the fastener being a bolt, the second hole part (H12) configured to accommodate a bolt head of the bolt.

10. A wheel mounting assembly (M) according to any of the claims 1 to 9, wherein
the axle (1) comprises a flange (13) at an end opposite of the first match part (11), the flange (13) being configured to be in contact with the wheel assembly (W).

11. A wheel mounting assembly (M) according claim 10, wherein the axle (1) comprises a main part (1a) and a washer part (1b) which being configured to be able to be detachable,
the first match part (11) being on the main part (1a), the flange (13) being part of the washer part (1b).

12. A wheel mounting assembly (M) according claim 11, in situation that the main part (1a) and the washer part (1b) being attached, the washer part (1b) being not able to rotate relative to the main part (1a).

13. A wheel mounting assembly (M) according to any of the claims 1 to 12, wherein the adapter (2) comprising a first part (2a) and a second part (2b) connecting to each other, outer diameter of the first part (2a) is larger than outer diameter of the second part (2b),
in axial direction (A), the first part (2a) configured to face away from the axle (1) and the second part (2b) configured to face the axle (1).

14. A travelling device (D) comprising:
- a frame (F);
- at least one wheel assembly (W); and
- at least one wheel mounting assembly (M) according to any of the claims 1 to 12,
wherein the wheel assembly (W) being assembled on the axle (1) of the wheel mounting assembly (M), the adapter (2) of the wheel mounting assembly (M) being fixed on the frame (F).

15. A travelling device (D) according to claim 14, wherein the adapter (2) being welded on the frame (F).

16. A travelling device (D) according to claim 14 or 15, wherein the frame (F) comprising a mounting hole (F1), the adapter (2) being positioned partly in the mounting hole (F1).

17. A travelling device (D) according to any of claims 14 to 16, wherein
the frame (F) comprises a mounting hole (F1), the adapter (2) being positioned partly in the mounting hole (F1),
the adapter (2) comprising a first part (2a) and a second part (2b) connecting to each other, outer diameter of the first part (2a) is larger than outer diameter of the second part (2b),
in axial direction (A), the first part (2a) configured to face away from the axle (1) and the second part (2b) configured to face the axle (1),
between the first part (2a) and the second part (2b) forming a shoulder (2c), the shoulder (2c) being in contact with the frame (F).

18. A travelling device (D) according to any one of claims 14 to 17, wherein the travelling device (D) is a pressure washer.
